# EUROPÄISCHE PATENTSCHRIFT

(11) **EP 3 074 862 B1**
(45) Veröffentlichungstag und Bekanntmachung des Hinweises auf die Patenterteilung: **16.09.2020**
(21) Anmeldenummer: 14805534.6
(22) Anmeldetag: 24.11.2014
(51) Int. Cl.: G06F 9/4401, G06F 21/55, G06F 21/57, G06F 21/85

(54) **VERFAHREN FÜR EINEN SICHEREN HOCHFAHRABLAUF EINES ELEKTRONISCHEN SYSTEMS**
METHOD FOR A SECURE BOOT-UP PROCESS OF AN ELECTRONIC SYSTEM
PROCÉDÉ POUR LE DÉROULEMENT SÛR D'UN DÉMARRAGE D'UN SYSTÈME ÉLECTRONIQUE

(30) Priorität: 28.11.2013 DE 102013224365
(43) Veröffentlichungstag der Anmeldung: 05.10.2016
(73) Patentinhaber: Siemens AG Österreich, 1210 Wien (AT)
(72) Erfinder: GHAMESHLU, Majid, A-1110 Wien (AT); MATSCHNIG, Martin, A-3430 Tulln (AT); TAUCHER, Herbert, A-2340 Mödling (AT)
(74) Vertreter: Maier, Daniel Oliver
(86) Internationale Anmeldenummer: PCT/EP2014/075393
(87) Internationale Veröffentlichungsnummer: WO 2015/078809

(56) Entgegenhaltungen:
- EP-A1- 2 570 956
- US-A1- 2010 106 979
- US-A1- 2011 078 430

## Beschreibung

### Technisches Gebiet

Die vorliegende Erfindung betrifft allgemein das Gebiet der elektronischen Systeme und Schaltungen, insbesondere der integrierten, elektronischen Schaltungen wie z.B. anwendungsspezifische integrierte Schaltungen (ASICs) oder Field Programmable Gate Arrays (FPGAs). Im Speziellen bezieht sich die vorliegende Erfindung auf ein Verfahren für einen sicheren Hochfahrablauf eines elektronischen Systems, insbesondere einer integrierten, elektronischen Schaltung, welche zumindest eine Mastereinheit, ein Bussystem, einen Arbeitsspeicher, einen internen Speicher und zumindest eine oder mehrere Slave-Einheiten sowie Schnittstellen für einen Anschluss externer Einheiten (z.B. externe Speicher, etc.) aufweist. Der Hochfahrablauf wird dabei in mehreren Stufen durchgeführt, wobei in einer ersten Stufe ein erstes Hochfahrprogramm aus einem internen Speicher, in einer zweiten Stufe durch Ausführen des ersten Hochfahrprogramms ein zweites Hochfahrprogramm aus einem ersten externen Speicher und in einer dritten Stufe durch Ausführen des zweiten Hochfahrprogramms eine Anwendung aus einem zweiten externen Speicher in den Arbeitsspeicher der elektronischen Schaltung geladen wird.

### Stand der Technik

Ein Hochfahrablauf eines elektronischen Systems wie z.B. einer integrierten, elektronischen Schaltung (z.B. ASICs, FPGAs, etc.), welcher auch als Booten oder Boot-Vorgang bezeichnet wird, bezeichnet üblicherweise ein Laden von beispielsweise systemrelevanten Anwendungen (z.B. Betriebssystem, etc.), wie es z.B. nach einem Einschalten eines elektronischen Systems erforderlich ist. So wird bei einem Computer beispielsweise das Laden des so genannten Betriebssystems als Booten bzw. als Hochfahrablauf bezeichnet. Bei so genannten FPGAs wird beispielsweise beim Einschalten bzw. beim Hochfahrablauf eine Konfiguration von einem externen, seriellen Speicher (z.B. Flash-Speicher, etc.) geladen.

Dieser Hochfahrablauf oder Boot-Vorgang wird bei einem elektronischen System üblicherweise in mehreren Stufen durchgeführt. Nach einem Einschalten der elektronischen Schaltung wird zunächst in einer ersten Stufe ein einfaches Programm - ein so genannter Boot-Code - als erstes Hochfahrprogramm aus einem kleinen Speicher wie z.B. einem Festwertspeicher oder Read-Only-Memory (ROM), welcher innerhalb des elektronischen Systems angebracht ist, gelesen und dann von einer speziellen Mastereinheit des elektronischen Systems, insbesondere einer eingebetteten Central Processing Unit (CPU), ausgeführt. Von diesem ersten Hochfahrprogramm wird dann wiederum in einer zweiten Stufe von einem kleinen externen Speicher, welcher beispielsweise als so genannter Flash-Speicher ausgeführt sein kann, ein zweites Hochfahrprogramm - ein so genannter "Second Level"-Boot-Code - in einen Arbeitsspeicher, welcher zur speziellen Mastereinheit bzw. CPU gehört, geladen. Das zweite Hochfahrprogramm wird dann in einer dritten Stufe aus dem Arbeitsspeicher heraus ausgeführt. Dadurch wird eine Anwendung bzw. eine eigentliche Applikation aus einem externen Massenspeicher wie z.B. aus einer Secure Digital- bzw. SD-Karte, etc. in den Arbeitsspeicher geladen. Im Folgenden wird dann die Anwendung im elektronischen System gestartet.

Wird nun ein Inhalt des externen Speicher bzw. des externen Massenspeichers manipuliert oder gehackt, so kann dies nachteilige oder negative Folgen für das elektronische System haben und/oder ein Sicherheitsrisiko darstellen. So kann beispielsweise eine fehlerhafte Anwendung, welche absichtlich manipuliert oder nur mangelhaft ausgeführt worden ist, in das elektronische System geladen werden und zu Sicherheitsproblemen und/oder zu Fehlfunktionen des elektronischen Systems führen. Weiterhin können beispielsweise im elektronischen System gesperrte Funktionen, welche z.B. für höherwertige Produkte oder Einsatzmöglichkeiten des elektronischen Systems vorgesehen sind, absichtlich oder unabsichtlich freigeschalten werden. Weiterhin besteht auch die Möglichkeit, dass eine Hardware-Plattform der elektronischen Schaltung durch entsprechende Manipulationen im externen Speicher bzw. im externen Massenspeicher zweckentfremdet wird. Daher werden insbesondere bei elektronischen Systemen wie z.B. integrierte, elektronische Schaltungen (z.B. ASICs, FPGAs, etc.), von welchen beim Hochfahrablauf externe Speicher wie z.B. Flash-Speicher, etc. und/oder externe Massenspeicher genutzt werden, sichere Hochfahrablauf-Verfahren gesucht, um die elektronischen Systeme vor Manipulationen, Hacker-Attacken, etc. zu schützen.

Eine Möglichkeit, einen Hochfahrablauf eines elektronischen Systems sicherer zu gestalten, stellt beispielsweise ein so genanntes sicheres oder "secure" Boot-Verfahren dar, bei welchem der Bootvorgang z.B. mit einem vorangegangenen Integritätscheck der Hardware wie z.B. externer Speicher verknüpft wird. Dazu wird z.B. das so genanntes Core Root of Trust for Measurement (CRTM)-Modul basierend auf der TPM Specification Version 1.2 der Trusted Computing Group im elektronischen System eingesetzt. Das CRTM-Modul ist ein Funktion bzw. ein Code-Module, durch welches der Boot-Vorgang erweitert bzw. mit einem vorangegangenen Integritätscheck verknüpft wird. Vor dem eigentlichen Boot-Vorgang wird durch das CRTM-Modul die zugrundeliegende Hardware überprüft bzw. ein Integritätscheck durchgeführt. Durch das CRTM-Modul wird die dem Boot-Vorgang zugrundeliegende Hardware z.B. mit einer so genannten Hash-Funktion gemessen und dann zumindest ein Messwert oder eine so genannte Prüfsumme z.B. in einem geschützten Speicherbereich oder in einem Registerbereich des so genannten Trust Platform Modul, welches in der TPM Specification Version 1.2 der Trusted Computing Group beschrieben wird, abgelegt. Diese zumindest eine Prüfsumme bzw. dieser Messwert wird beim Hochfahrablauf bzw. beim Boot-Vorgang genutzt, um zu entscheiden, ob eine Hardware bzw. eine Komponente vertrauenswürdig ist. Wird an der Konfiguration beispielsweise durch einen Angriff auf eine gemessene Konfiguration (z.B. Änderung einer Hardware-Komponente, etc.) etwas verändert, so wird dies anhand der zumindest einen gespeicherten Prüfsumme erkannt.

Diese Vorgangsweise, um einen Boot-Vorgang sicherer zu gestalten, weist allerdings den Nachteil auf, dass ein zusätzliches Modul wie z.B. das CRTM-Modul in das elektronische System integriert bzw. mit dem Boot-Vorgang verknüpft wird. Weiterhin wird für die Integritätsprüfung zumindest ein Prüfsummenwert einer gemessenen und als vertrauenswürdigen befundenen Konfiguration in einem Speicherbereich permanent abgelegt. Ein Hinterlegen von Prüfsummenwerten, etc. im elektronischen System kann allerdings ein Ziel von Attacken und Manipulationen darstellen. Der Prüfsummenwert kann z.B. ausgelesen oder manipuliert werden, so dass eine Manipulation der externen Speicher für den Boot-Vorgang möglich ist.

Eine weitere Möglichkeit für eine Integritätsprüfung für den Boot-Vorgang ist beispielsweise eine Berechnung eines Hashwertes z.B. mittels eines so genannten Secure-Hash-Algorithmus oder SHA-Algorithmus über relevante Registerinhalte. Ein berechneter Hash-Wert wird dann mit einem erwarteten Hash-Wert verglichen, um damit zu prüfen, ob eine Komponente des Boot-Vorgangs vertrauenswürdig ist. Auch bei dieser Variante der Integritätsprüfung besteht der Nachteil, dass für einen Vergleich der zu erwartende Hash-Wert beispielsweise in der Hardware des elektronischen Systems abgelegt werden muss, und damit ein Ziel für Attacken, Manipulationen, etc. darstellen kann.

Weiterhin ist aus der Schrift US 2011/0078430 A1 ein Verfahren bekannt, durch welches ein elektronischer Glückspielautomat mittels während eines mehrstufigen Hochfahr- oder Bootvorgangs vor manipulierter Software geschützt werden soll. Dabei werden zuerst ein Pre-Boot-Ladeprogramm, dann ein Boot-Ladeprogramm und dann ein sogenanntes BIOS-Kontrollprogramm in einen Arbeitsspeicher geladen, bevor abschließend von einem externen Speicher ein Anwendungsprogramm oder BIOS in den Automaten geladen und dort ausgeführt wird. Das in der Schrift US 2011/0078430 A1 beschriebene Verfahren weist allerdings den Nachteil auf, dass nur während des Ladens des Pre-Boot-Ladeprogramms lesende Zugriffe überprüft werden. Bei den weiteren Stufen des Hochfahrvorgangs erfolgt keine Überprüfung der Zugriffe, sondern nur eine Integritätsprüfung der während des Hochfahrvorgangs in den Arbeitsspeicher geladenen Software-Komponenten mittels eines sogenannten Secure-Hash-Algorithmus.

### Darstellung der Erfindung

Der Erfindung liegt daher die Aufgabe zugrunde, ein Verfahren anzugeben, durch welches auf einfache Weise ein sicherer Hochfahrablauf für ein elektronisches System, insbesondere eine integrierte, elektronische Schaltung, ohne permanent abgespeicherte Messwerte und/oder Schlüssel ermöglicht wird. Diese Aufgabe wird durch ein Verfahren der eingangs genannten Art mit den Merkmalen gemäß dem unabhängigen Patentanspruch gelöst. Vorteilhafte Ausführungsformen der vorliegenden Erfindung sind in den abhängigen Ansprüchen beschrieben.

Erfindungsgemäß erfolgt die Lösung der Aufgabe mit einem Verfahren der eingangs erwähnten Art, bei welchem für den Hochfahrablauf an die zumindest eine Mastereinheit des elektronischen Systems eine Busüberwachungseinheit angeschlossen wird. Von der Busüberwachungseinheit werden dann während einer Dauer des Hochfahrablaufs parallel zum Laden und Ausführen des ersten und zweiten Hochfahrprogramms interne Zugriffe der zumindest einen Mastereinheit überwacht und jeweilige Zugriffsdaten an eine Signaturbildungseinheit im elektronischen System weitergeleitet. Von der Signaturbildungseinheit wird dann über die Zugriffsdaten eine Ist-Signatur gebildet, wobei durch eine Start-/Stop-Registereinheit der Signaturbildungseinheit ein Umfang der Zugriffsdaten für die Ermittlung der Ist-Signatur eingestellt wird und wobei als Zugriffsdaten für die Ermittlung der Ist-Signatur Adressdaten, Kontrollinformationen und übertragene Daten herangezogen werden. Von der in einer dritten Stufe des Hochfahrablaufs geladenen Anwendung wird dann eine Soll-Signatur in eine Registereinheit geschrieben und dann die ermittelte Ist-Signatur mit der Soll-Signatur verglichen.

Der Hauptaspekt der erfindungsgemäß vorgeschlagenen Lösung besteht darin, dass weder Messwerte noch Schlüsselwerte oder Soll-Signaturen permanent im elektronischen System gespeichert werden. Eine Ist-Signatur wird dynamisch während des Hochfahrablaufs bzw. Boot-Vorgangs auf Basis der Hardware des elektronischen Systems ermittelt und mit einer Soll-Signatur, welche ebenfalls während des Hochfahr-Ablaufs von der zu ladenden Anwendung - d.h. von der zu ladenden Software - zur Verfügung gestellt wird, verglichen. Für einen Manipulation der im Hochfahrablauf genutzten externen Speicher bzw. der darin abgelegten Software oder eine Attacke während des Boot-Vorgangs sind daher detaillierte Kenntnisse über den inneren Aufbau des elektronischen Systems, insbesondere der integrierten, elektronischen Schaltung (z.B. ASIC, FPGA, etc.) notwendig. Weiterhin muss für eine Manipulation der zu ladenden Software im externen Speicher bekannt sein, welche Informationen bzw. Zugriffsdaten zu welchem Zeitpunkt in eine Bildung der Ist-Signatur einfließen. D.h. es bedarf einer genauen Kenntnis des inneren Aufbaus der Busüberwachungseinheit und der Realisierung der Signaturbildung in der Hardware des elektronischen Systems sowie der Kenntnis, welche im elektronischen System genutzten Mastereinheiten für die Signaturbildung mit Busüberwachungseinheiten versehen sind. Die Signatur kann nur dann genau ermittelt werden, wenn beispielsweise das elektronische System zyklusgenau simuliert werden kann. Dazu ist eine detaillierte Kenntnis des Aufbaus notwendig. Damit wird es durch das erfindungsgemäße äußerst aufwendig und zeitintensiv Manipulationen z.B. an externen Speicher bzw. deren Inhalten vorzunehmen. Weiterhin ermöglicht auch eine Analyse des Hochfahrablaufs keinen Rückschluss auf eine korrekte Soll-Signatur. Das erfindungsgemäße Verfahren stellt damit eine Möglichkeit für einen sehr sicheren Hochfahrablauf eines elektronischen Systems dar.

Dabei ist es günstig, wenn über eine Start-/Stop-Registereinheit der Signaturbildungseinheit ein Umfang der Zugriffsdaten für die Ermittlung der Ist-Signatur eingestellt werden kann. Dabei können durch eine entsprechende Einstellung der Start-/Stop-Registereinheit für die Bildung der Ist-Signatur von der Signatureinheit die Zugriffsdaten des gesamten Hochfahrablaufs herangezogen werden. Es besteht aber weiterhin die Möglichkeit, durch entsprechende Einstellung der Start-/Stop-Registereinheit nur Teile der Zugriffdaten des Hochfahrablaufs - wie z.B. nur Zugriffsdaten einer bestimmten Zeitspanne während des Hochfahrablaufs, etc. - für die Bildung der Ist-Signatur zu nutzen. Damit kann die Bildung der Ist-Signatur in der Signaturbildungseinheit an die jeweiligen Gegebenheiten und Einsatzvarianten, etc. des elektronischen Systems sehr einfach angepasst werden.

Es ist von Vorteil, wenn bei mangelnder Übereinstimmung von Ist-Signatur und Soll-Signatur der Hochlaufablauf abgebrochen wird und/oder das elektronische System in einen Anfangszustand zurückgesetzt wird. Auf diese Weise wird sehr einfach verhindert, dass eine manipulierte und/oder fehlerhafte Anwendung bzw. manipulierte und/oder schädliche Inhalte externer Speicher beim Hochfahrablauf in das elektronische System geladen und ausgeführt werden. Damit kann auch auf einfache Weise eine zweckfremde Nutzung des elektronischen Systems verhindert werden.

Für die Ermittlung der Ist-Signatur werden idealer Weise Adressdaten, Kontrollinformationen und Dateninhalte bzw. übertragene Daten der internen Zugriffe der zumindest einen Mastereinheit des elektronischen Systems auf ein Bussystem des elektronischen Systems während des Hochfahrablaufs genutzt. Diese Zugriffsdaten werden von der zumindest einen Mastereinheit auf das Bussystem gestellt, wobei während des Hochfahrablaufs bzw. während der einzelnen Stufen des Hochfahrablaufs verschiedenen internen Zugriffen der zumindest einen Mastereinheit des elektronischen Systems durchgeführt werden, bei welchen diese Zugriffsdaten genutzt werden. Die Ist-Signatur basiert damit auf Daten, welche vom Hochfahrablauf abhängen. Die Signatur kann nur dann genau ermittelt werden, wenn beispielsweise das elektronische System zyklusgenau simuliert werden kann. Für eine Manipulation bzw. eine Attacke sind damit genaue und detaillierte Kenntnisse des elektronischen Systems notwendig - wie z.B. zu welchem Zeitpunkt welche Informationen von der jeweiligen Mastereinheit bzw. von der zumindest einen Mastereinheit des elektronischen Systems auf das interne Bussystem gestellt werden. Diese Kenntnisse sind nur mit sehr großem Aufwand durch eine zyklusgenaue Simulation zu erlangen.

Diese Aufgabe wird durch das Verfahren aus Anspruch 1 gelöst. Weitere vorteilhafte Ausführungsformen werden in den abhängigen Ansprüchen 2-4 definiert.

### Kurzbeschreibung der Zeichnung

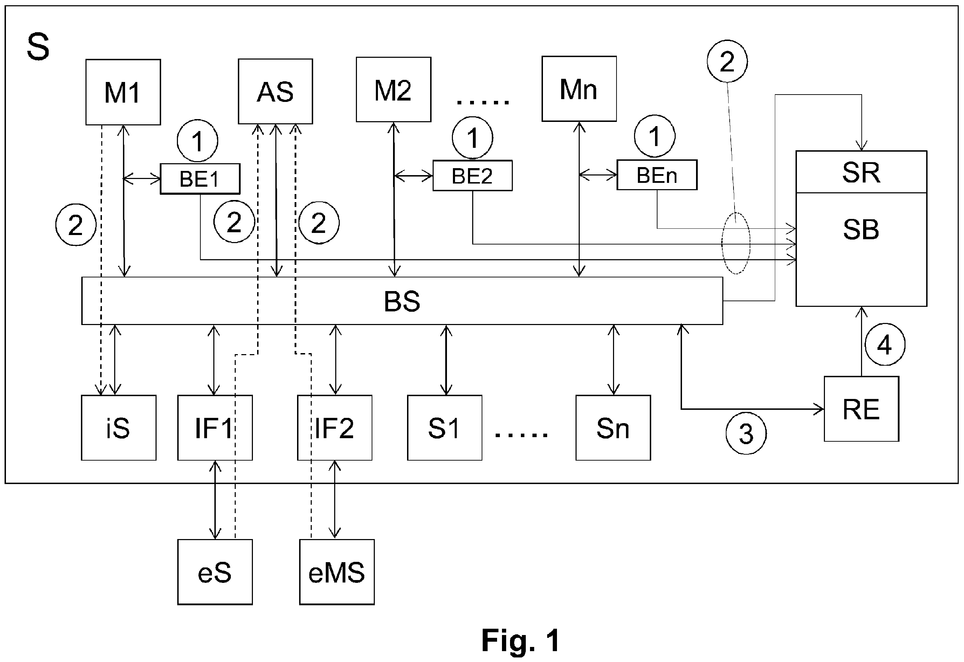

Die Erfindung wird nachfolgend in beispielhafter Weise anhand der beigefügten Figur erläutert. Figur 1 zeigt dabei in beispielhafter und schematischer Weise einen Ablauf des erfindungsgemäßen Verfahrens für einen sicheren Hochfahrablauf in einem beispielhaften elektronischen System.

### Ausführung der Erfindung

Figur 1 zeigt schematisch und beispielhaft ein elektronisches System S wie z.B. einen ASIC oder einen FPGA. Das beispielhaft in Figur 1 dargestellte elektronische System S weist mehrere Mastereinheiten M1, M2 bis Mn auf. Dabei kann beispielsweise die erste Mastereinheit M1 als eingebettete Control Processing Unit (CPU) bzw. Hauptprozessor oder als Mikrocontroller (MCU) ausgestaltet sein. Als weitere Mastereinheiten M2 bis Mn können beispielsweise weitere Mikrocontroller (MCU), Direct Memory Access-Controller (DMA-Controller), etc. vorgesehen sein. Weiterhin weist das elektronische System S einen Arbeitsspeicher AS auf, welcher z.B. als Random Access Memory oder RAM ausgeführt sein kann, und beispielsweise der ersten Mastereinheit M1 zugeordnet ist.

Weiterhin weist das elektronische System S einen internen Speicher iS auf. Dieser interne Speicher iS kann z.B. als Festwertspeicher oder Read-Only-Memory (ROM) ausgeführt sein und beinhaltet ein erstes Hochfahrprogramm - einen so genannten Boot-Code - für den Hochfahrablauf des elektronischen Systems S. Das elektronische System S umfasst auch zumindest eine oder mehrere Slave-Einheiten S1 bis Sn (z.B. Speichereinheiten, Peripherieeinheiten, Spezialprozessoren, etc.) sowie Schnittstellen IF1, IF2, über welche externe Speicher eS, eMS für den Hochfahrablauf mit dem elektronischen System S verbunden sind. Als erster externer Speicher eS kann dabei z.B. ein kleiner externer Speicher eM wie z.B. ein serieller Flash-Speicher an das elektronische System angebunden werden, in welchem ein zweites Hochfahrprogramm - eine so genannter "Second Level"-Boot-Code - abgelegt ist. Als zweiter externer Speicher eMS kann beispielsweise ein externer Massenspeicher eMS wie z.B. eine Secure Digital- bzw. SD-Karte, etc. eingesetzt werden. Im zweiten externen Speicher eMS sind beispielswiese eine oder mehrere in das elektronische System S zu ladenden Anwendungen wie z.B. systemrelevante Applikationen mit Betriebssystemfunktionalität, konfigurationsrelevante Applikationen, etc. gespeichert.

Für die Kommunikationsabläufe bzw. Zugriffe von Mastereinheiten M1, M2 bis Mn auf Slave-Einheiten S1 bis Sn, Schnittstellen IF1, IF2 und den internen Speicher iS ist im elektronischen System S eine Bussystem BS vorgesehen. Weiterhin umfasst das elektronische System S für den Ablauf des erfindungsgemäßen Verfahrens für einen sicheres Hochfahrablauf eine Signaturbildungseinheit zum Ermitteln einer Ist-Signatur aus Zugriffsdaten der Mastereinheiten M1, M2 bis Mn auf das Bussystem BS während des Hochfahrablaufs sowie eine Registereinheit RE, in welcher eine Soll-Signatur von einer geladenen Anwendung abgelegt werden kann. Die Signaturbildungseinheit SB weist weiterhin eine Start-Stop-Registereinheit SR auf, durch welchen ein Umfang der Zugriffsdaten des Hochfahrablaufs bzw. Boot-Vorgangs des elektronischen Systems S für eine Bildung der Ist-Signatur eingestellt werden kann. Durch die entsprechenden Einstellungen in der Start-Stop-Registereinheit SR kann festgelegt werden, ob für die Erstellung der Ist-Signatur z.B. die Zugriffsdaten des gesamten Hochfahrablaufs bzw. Boot-Vorgangs oder nur Teile der Zugriffsdaten verwendet werden. In der Start-Stop-Registereinheit kann dabei beispielsweise eingestellt werden, ob die Zugriffsdaten während der gesamten Bootzeit bzw. der Zeitdauer des gesamten Hochfahrablaufs oder nur in einem oder mehreren ausgewählten Zeitfenstern innerhalb der Dauer des Hochfahrablaufs genutzt werden.

Weiterhin sind beim elektronischen System S Busüberwachungseinheiten BE1, BE2 bis BEn vorgesehen, an welche in einem ersten Verfahrensschritt 1 alle oder ausgesuchte Mastereinheiten M1, M2 bis Mn angeschlossen werden. Mit Hilfe der Busüberwachungseinheiten BE1, BE2 bis BEn können die internen Zugriffe der Mastereinheiten M1, M2 bis Mn in einem zweiten Verfahrensschritt während einer Dauer des Hochfahrablaufs bzw. des Boot-Vorgangs überwacht und Zugriffsdaten wie z.B. Adressdaten, Kontrolldaten und/oder übertragene Dateninhalte an die Signaturbildungseinheit SB weitergeleitet werden.

Im zweiten Verfahrensschritt 2 wird der Hochfahrablauf bzw. Boot-Vorgang, welcher beim elektronischen System S üblicherweise in mehreren Stufen durchgeführt wird, mit einem Einschalten des elektronischen Systems S gestartet. Nach dem Einschalten wird zunächst in einer ersten Stufe des Hochfahrablaufs ein erstes Hochfahrprogramm, der so genannte Boot-Code, aus dem internen Speicher iS beispielsweise von der ersten Mastereinheit M1 bzw. dem Hauptprozessor M1 des elektronischen Systems S gelesen und ausgeführt. Vom ersten Hochfahrprogramm wird dann in einer zweiten Stufe des Hochfahrablaufs ein zweites Hochfahrprogramm, der so genannte "Second-Level"-Boot-Code, aus dem ersten externen Speicher eS in den Arbeitsspeicher AS geladen. Durch ein Ausführen des zweiten Hochfahrprogramms wird dann in einer dritten Stufe des Hochfahrablaufs eine Anwendung bzw. eine eigentliche Applikation für das elektronische System S aus dem zweiten externen Speicher eMS in den Arbeitsspeicher AS geladen. Diese Anwendung weist beispielsweise systemrelevante bzw. Betriebssystem ähnliche Funktionen auf. Bei einem FPGA kann die Anwendung z.B. eine Konfiguration für die spezifische Verwendung des FPGAs beinhalten.

Während eines Durchlaufens der Stufen des Hochfahrablaufs des elektronischen Systems werden parallel zum Laden und Ausführen von Boot-Codes und Anwendung im zweiten Verfahrensschritt durch die Busüberwachungseinheiten BE1, BE2, BEn die Zugriffe der jeweiligen angeschlossenen Mastereinheiten M1, M2, Mn überwacht. Die Zugriffsdaten wie z.B. Adressdaten, Dateninhalte der Zugriffe, Kontrollinformationen, etc. werden dann an die Signaturbildungseinheit SB weitergeleitet. In der Signaturbildungseinheit SB wird dann je nach den Einstellungen der Start-/Stop-Registereinheit SR aus den Zugriffsdaten die Ist-Signatur erstellt. Auf Basis der Einstellungen der Start-/Stop-Registereinheit SR wird in der Signaturbildungseinheit SB dann die Ist-Signatur über die Zugriffsdaten des gesamten Hochfahrablaufs oder nur Teile der Zugriffsdaten des Hochfahrablaufs gebildet.

In einem dritten Verfahrensschritt 3 wird die aus dem zweiten Speicher eMS geladene Anwendung im Arbeitsspeicher AS gestartet. Von der Anwendung wird dabei über das Bussystem BS eine Soll-Signatur, welche z.B. in der Anwendung Software-mäßig hinterlegt ist, in die Registereinheit RE des elektronischen Systems S geschrieben. In einem vierten Verfahrensschritt 4 wird am Ende der Signaturbildung von der Signaturbildungseinheit SB die während des Hochfahrablaufs gebildete Ist-Signatur mit der in der Registereinheit RE hinterlegten Soll-Signatur verglichen.

Bei Übereinstimmung der auf Basis der Hardware-Zugriffe im elektronischen System S erzeugten Ist-Signatur mit der Soll-Signatur wird die Anwendung bzw. werden die externen Speicher eS, eMS als vertrauenswürdig eingestuft und die Anwendung ausgeführt. Das elektronische System S wird damit sicher und ordnungsgemäß gestartet bzw. ist ordnungsgemäß hochgelaufen.

Wird im vierten Verfahrensschritt 4 beim Vergleich der Ist-Signatur mit der Soll-Signatur eine mangelnde Übereinstimmung festgestellt, so wird beispielsweise von einer Manipulation, einem Fehler, etc. der Anwendung bzw. der Inhalte der externen Speicher eS, eMS und einem Sicherheitsrisiko ausgegangen. In diesem Fall wird der Hochfahrablauf bzw. der Boot-Vorgang abgebrochen. Das elektronische System S wird dann in einen Anfangszustand zurückgesetzt, um einen Schaden oder eine zweckfremde Verwendung des elektronischen Systems S zu verhindern.

## Patentansprüche

1. Verfahren für einen sicheren Hochfahrablauf einer integrierten, elektronischen Schaltung (S) zumindest bestehend aus zumindest einer Mastereinheit (M1, M2 bis Mn), einem Bussystem (BS), einem Arbeitsspeicher (AS), einem internen Speicher (iS), zumindest einer Schnittstelle (IF1, IF2) zum Anbinden externer Einheiten (eS, eMS) und Slave-Einheiten (S1 bis Sn), wobei der Hochfahrablauf in mehreren Stufen durchgeführt wird (2), und wobei in einer ersten Stufe ein erstes Hochfahrprogramm aus dem internen Speicher (iS), in einer zweiten Stufe durch Ausführen des ersten Hochfahrprogramms ein zweites Hochfahrprogramm aus einem ersten externen Speicher (eS) und in einer dritten Stufe durch Ausführen des zweiten Hochfahrprogramms aus einem zweiten externen Speicher (eMS) eine Anwendung in den Arbeitsspeicher (AS) geladen wird (2), **dadurch gekennzeichnet, dass** an die zumindest eine Mastereinheit (M1, M2 bis Mn) eine Busüberwachungseinheit (BE1, BE2 bis BEn) angeschlossen wird (1), dass während einer Dauer des Hochfahrablaufs parallel zum Laden und Ausführen des ersten und zweiten Hochfahrprogramms von der Busüberwachungseinheit (BE1, BE2 bis BEn) interne Zugriffe der zumindest einen Mastereinheit (M1, M2 bis Mn) überwacht und jeweilige Zugriffsdaten an eine Signaturbildungseinheit (SB) weitergeleitet werden (2), dass dann von der Signaturbildungseinheit (SB) aus den Zugriffsdaten der zumindest einen Mastereinheit (M1, M2 bis Mn) eine Ist-Signatur erstellt wird (2), wobei durch eine Start-/Stop-Registereinheit (SR) der Signaturbildungseinheit (SB) ein Umfang der Zugriffsdaten für die Ermittlung der Ist-Signatur eingestellt wird und wobei als Zugriffsdaten für die Ermittlung der Ist-Signatur Adressdaten, Kontrollinformationen und übertragene Daten herangezogen werden (2), dass von der in der dritten Stufe des Hochfahrablaufs geladenen Anwendung eine Soll-Signatur in eine Registereinheit (RE) geschrieben wird (3), und dass dann die von der Signaturbildungseinheit (SB) ermittelt Ist-Signatur mit der Soll-Signatur verglichen wird (4).

2. Verfahren nach Anspruch 1, **dadurch gekennzeichnet, dass** bei mangelnder Übereinstimmung von Ist-Signatur und Soll-Signatur der Hochfahrablauf abgebrochen wird und/oder das elektronische System (S) in einen Anfangszustand zurückgesetzt wird (4).

3. Verfahren nach einem der Ansprüche 1 bis 2, **dadurch gekennzeichnet, dass** durch eine Einstellung der Start-/Stop-Registereinheit (SR) von der Signaturbildungseinheit (SB) die Zugriffsdaten des gesamten Hochfahrablaufs zum Ermitteln der Ist-Signatur herangezogen werden.

4. Verfahren nach einem der Ansprüche 1 bis 2, **dadurch gekennzeichnet, dass** durch die Einstellung der Start-/Stop-Registereinheit (SR) von der Signaturbildungseinheit (SB) nur Teile der Zugriffsdaten des Hochfahrablaufs zum Ermitteln der Ist-Signatur herangezogen werden.

## Claims

1. Method for a secure boot-up process of an integrated, electronic circuit (S) at least consisting of at least one master unit (M1, M2 to Mn), a bus system (BS), a RAM (AS), an internal memory (iS), at least one interface (IF1, IF2) for linking external units (eS, eMS) and slave units (S1 to Sn), wherein the boot-up process is carried out in several stages (2), and wherein in a first stage a first boot-up program from the internal memory (iS), in a second stage by executing the first boot-up program a second boot-up program from a first external memory (eS) and in a third stage by executing the second boot-up program from a second external memory (eMS) an application is loaded (2) into the RAM (AS), **characterised in that** a bus monitoring unit (BE1, BE2 to BEn) is connected (1) to the at least one master unit (M1, M2 to Mn), that during a duration of the boot-up process parallel to loading and executing the first and second boot-up program by the bus monitoring unit (BE1, BE2 to BEn), internal access to the at least one master unit (M1, M2 to Mn) is monitored and respective access data is forwarded (2) to a signature forming unit (SB), that then an actual signature is created (2) by the signature forming unit (SB) from the access data of the at least one master unit (M1, M2 to Mn), wherein by means of a start/stop register unit (SR) of the signature forming unit (SB), a scope of the access data for the determination of the actual signature is adjusted and wherein address data, control information and transmitted data is used (2) as access data for determining the actual signature, that a target signature is written into (3) a register unit (RE) by the application loaded in the third stage of the start-up process, and that then the actual signature determined by the signature forming unit (SB) is compared with the target signature (4).

2. Method according to claim 1, **characterised in that** the boot-up process is interrupted in the case of a lack of conformity between the actual signature and the target signature, and/or the electronic system (S) is reset (4) into an initial state.

3. Method according to one of claims 1 to 2, **characterised in that** by adjusting the start/stop register unit (SR) by the signature formation unit (SB), access information to the entire start-up process is used to determine the actual signature.

4. Method according to one of claims 1 to 2, **characterised in that** by adjusting the start/stop register unit (SR) by the signature forming unit (SB), only parts of the access data of the start-up process are used to determine the actual signature.

## Revendications

1. Procédé pour le déroulement sûr d'un démarrage d'un système (S) électronique intégré au moins composé d'au moins une unité maître (M1, M2 à Mn), d'un système de bus (BS), d'une mémoire de travail (AS), d'une mémoire interne (iS), d'au moins une interface (IF1, IF2) pour relier des unités externes (eS, eMS) et d'unités esclaves (S1 à Sn), dans lequel le démarrage est effectué en plusieurs étapes (2), et dans lequel dans une première étape, un premier programme de démarrage issu de la mémoire interne (iS) est chargé, un deuxième programme issu d'une première mémoire externe (eS) est chargé dans une deuxième étape par exécution du premier programme de démarrage, et une application issue d'une deuxième mémoire externe (eMS) est chargée dans la mémoire de travail (AS) dans une troisième étape par exécution du deuxième programme de démarrage, **caractérisé en ce qu'**une unité de surveillance de bus (BE1, BE2 à BEn) est raccordée à l'au moins une unité maître (M1, M2 à Mn), **en ce que** pendant une durée du démarrage, parallèlement au chargement et à l'exécution des premier et deuxième programmes de démarrage, des accès internes de l'au moins une unité maître (M1, M2 à Mn) sont surveillés par l'unité de surveillance de bus (BE1, BE2 à Ben) et des données d'accès respectives sont transmises à une unité de formation de signature (SB), **en ce qu'**une signature réelle est établie (2) par l'unité de formation de signature (SB) à partir des données d'accès de l'au moins une unité maître (M1, M2 à Mn), **en ce que** par le biais d'une unité de registre start-stop (SR) de l'unité de formation de signature (SB), un volume des données d'accès est régulé pour déterminer la signature réelle, et des données d'adresse, des données de contrôle et des données transmises étant rapprochées (2) en tant que données d'accès pour la détermination de la signature réelle, **en ce qu'**une signature de consigne est écrite (3) dans une unité de registre (RE) par l'application chargée dans la troisième étape du démarrage, et **en ce que** la signature réelle déterminée par l'unité de formation de signature (SB) est comparée (4).à la signature de consigne

2. Procédé selon la revendication 1, **caractérisé en ce qu'**en l'absence de concordance de la signature réelle avec la signature de consigne, le démarrage est interrompu et/ou le système électronique (S) est ramené (4) dans un état de départ.

3. Procédé selon l'une des revendications 1 à 2, **caractérisé en ce que** les données d'accès de l'ensemble du démarrage sont rapprochées pour déterminer la signature réelle par un réglage de l'unité de registre start-stop (SR) de l'unité de formation de signature (SB).

4. Procédé selon l'une des revendications 1 à 2, **caractérisé en ce que** seules des parties des données d'accès du démarrage sont rapprochées pour déterminer la signature réelle par le réglage de l'unité de registre start-stop (SR) de l'unité de formation de signature (SB).
